# EUROPÄISCHE PATENTSCHRIFT

(11) **EP 3 214 021 B1**
(45) Veröffentlichungstag und Bekanntmachung des Hinweises auf die Patenterteilung: **20.10.2021**
(21) Anmeldenummer: 17152844.1
(22) Anmeldetag: 24.01.2017
(51) Int. Cl.: B65G 1/04, B65G 1/137

(54) **VERFAHREN ZUM BETREIBEN EINES WABENLAGERS**
METHOD OF OPERATING A HONEYCOMB STORAGE
PROCÉDÉ DE FONCTIONNEMENT D'UN ENTREPÔT

(30) Priorität: 29.01.2016 DE 102016101674
(43) Veröffentlichungstag der Anmeldung: 06.09.2017
(60) Teilanmeldung: 19168256.6
(73) Patentinhaber: KEURO Besitz GmbH & Co. EDV-Dienstleistungs KG, 77855 Achern (DE)
(72) Erfinder: Stolzer, Armin, 76530 Baden-Baden (DE)
(74) Vertreter: Lemcke, Brommer & Partner Patentanwälte Partnerschaft mbB

(56) Entgegenhaltungen:
- WO-A1-83/03086
- DE-A1- 3 223 594
- DE-A1- 19 650 538
- US-A- 4 063 653
- Remmert GmbH: "Remmert Wabenlager - Mehrfachstation an Säge", , 17. September 2015 (2015-09-17), XP054977604, Gefunden im Internet: URL:https://www.youtube.com/watch?v=SDEV7u _pOFA [gefunden am 2017-07-27]

## Beschreibung

Die vorliegende Erfindung betrifft ein Verfahren zum Betreiben eines Wabenlagers nach dem Oberbegriff des Anspruchs 1. Ein solches Wabenlager umfasst mindestens ein Regal, das eine Mehrzahl von nebeneinander und übereinander angeordneten Lagerplätzen zur Aufnahme von Kassetten aufweist, welche bevorzugt zum Lagern von Langgut eingesetzt werden. Die Lagerplätze sind von einer Bedienseite des Regals zugänglich, an der ein Regalbediengerät vorgesehen ist. Die Lagerplätze sind hierbei solcherart ausgestaltet, dass die Kassetten in Längsrichtung horizontal aus den Lagerplätzen entnehmbar und in diese einbringbar sind.

Wabenlager dieser Art dienen zur Lagerhaltung von in der Regel langgestreckten Werkstücken, häufig als Langgut bezeichnet, wie beispielsweise Profilen, Stangen und Schienen, die oft mehrere Meter lang sind und aufgrund ungenügender Eigenstabilität oder zum Schutz der Oberflächen in Kassetten in das Wabenlager eingebracht werden. Die Ausrichtung der Lagerplätze in einem Wabenlager ermöglicht, eine Vielzahl von Lagerplätzen in einem Regal unterzubringen und darauf zugreifen zu können, denn die Stirnflächen der Werkstücke und somit auch der Kassetten, in denen die Werkstücke aufbewahrt werden, sind im Vergleich zu ihrer Längsausdehnung normalerweise klein. Gleichzeitig können die Kassetten ohne weiteres längs aus dem Regal herausgezogen und in dieses eingeschoben werden. Die Anzahl der von einer Seite des Regals zugänglichen Lagerplätze wird durch diese Anordnung also optimiert.

Langgut, das in einem solchen Wabenlager vorgehalten wird, wird in der Regel in Bündeln gleichartiger Werkstücke kassettenweise eingelagert, jedoch nicht wieder kassettenweise entnommen, sondern es muss normalerweise je nach Auftrag aus unterschiedlichen (Langgut)kassetten kommissioniert werden. Ein entsprechender Auftrag kann hierbei beispielsweise von einem Kunden eines Stahlhändlers stammen, der die Ware in einem Wabenlager vorhält, oder auch von der Produktion eines produzierenden Betriebs, der Halbzeug in einem eigenen Wabenlager bereithält. Mitunter müssen für ein Produkt, beispielsweise für ein Fenster, Werkstücke aus typischerweise zehn verschiedenen Langgutkassetten, beispielsweise zehn unterschiedliche Profile, entnommen und zu einem Auftrag zusammengestellt bzw. kommissioniert werden.

Hierzu weist ein Wabenlager der vorliegenden Art an einer Frontseite des mindestens einen Regals, die dessen Bedienseite gegenüberliegt, eine Kommissioniereinrichtung auf, mit der die einzelnen Kommissionen zusammengestellt und zum Abtransport bereitgestellt werden. Diese Kommissioniereinrichtung ist einer Anzahl von bodennahen Lagerplätzen im Regal zugeordnet, wobei diese Lagerplätze als Bereitstellungslagerplätze ausgestaltet sind. Dies bedeutet, dass darin befindliche Kassetten auch an der Frontseite des Regals entnommen werden können. Typischerweise gibt es in einem herkömmlichen Wabenlager nur wenige Bereitstellungslagerplätze, und die Kommission muss manuell abgeführt werden.

Um eine Kommission zusammenzustellen, werden von einem übergeordneten Lagerverwaltungssystem oder einer Bedienperson, dem Kommissionierer, die aus dem Wabenlager zu entnehmenden Werkstücke angefordert, so dass das Regalbediengerät die Kassetten, in denen sich die angeforderten Werkstücke befinden, sukzessive aus ihren Lagerplätzen holt und im Bereitstellungslagerplatz bzw., wenn mehrere solche Plätze vorhanden sind, in den Bereitstellungslagerplätzen absetzt. Von dort können sie dann an der Frontseite des Regals in die Kommissioniereinrichtung gezogen werden. Dort wird die benötigte Anzahl an darin befindlichen Werkstücken entnommen und in andere Kassetten oder auf Bodenlager kommissioniert.

Aus US4063653A ist ein Verfahren zum Betreiben eines Wabenlagers nach dem Oberbegriff des Anspruchs 1 bekannt. Eine herkömmliche Kommissioniereinrichtung besteht üblicherweise aus mehreren Kommissionierplätzen, auf denen Kassetten oder sonstige Transporteinrichtungen für die Werkstücke, insbesondere Langgut angeordnet sind. Unterstützt von Hubwagen und Kränen, ziehen Bediener die in den Bereitstellungslagerplätzen bereitgestellten Kassetten aus dem Regal und entnehmen die für eine Kommission benötigte Anzahl von Werkstücken, um sie auf dem entsprechenden Kommissionierlagerplatz abzulegen. Danach schieben die Bediener die Kassette mit den nicht benötigten Werkstücken wieder zurück auf den Bereitstellungslagerplatz, von wo sie das Regalbediengerät wieder an den eigentlichen Lagerplatz zurücklagert.

Insbesondere der Arbeitsschritt des Entnehmens von benötigten Werkstücken aus der Kassette bis zum Ablegen auf den entsprechenden Kommissionierplatz ist nach dieser herkömmlichen Vorgehensweise recht zeitintensiv, wobei teilweise längere Strecken zurückzulegen sind, wenn mehrere Kommissionierplätze nebeneinander bedient werden.

Der vorliegenden Erfindung liegt daher die Aufgabe zugrunde, ein Verfahren zum Betreiben eines Wabenlagers der vorliegenden Art zu verbessern, um die Arbeitsabläufe beim Kommissionieren zu optimieren.

Gelöst ist diese Aufgabe durch ein Verfahren mit den Merkmalen des Anspruchs 1. Vorteilhafte Ausgestaltungen und Weiterbildungen der Erfindung finden sich in den Ansprüchen 2 bis 9.

Als Kommissioniereinrichtung eines erfindungsgemäßen betriebenen Wabenlagers werden demnach mehrere Kommissionierplätze, die zum Abstellen von Kassetten dienen, sowie ein Kommissionierwagen verwendet, der entlang der Frontseite des Regals, in Querrichtung der Kassetten verfahrbar ist. Der Kommissionierwagen ist hierbei so ausgebildet, dass er alle Kommissionierplätze anfahren kann.

Für die Kommissioniereinrichtung wird erfindungsgemäß außerdem eine Entnahmevorrichtung zum Herausziehen und Einschieben von Kassetten aus dem und in die Bereitstellungslagerplätze verwendet, wobei diese Entnahmevorrichtung ebenfalls entlang der Frontseite des Regals, in Querrichtung der Kassetten verfahrbar ist.

Im Rahmen der vorliegenden Erfindung kann die Entnahmevorrichtung am Kommissionierwagen angeordnet und gegebenenfalls Teil desselben sein, oder aber die Entnahmevorrichtung ist vom Kommissionierwagen unabhängig, so dass der Kommissionierwagen und die Entnahmevorrichtung separat verfahrbar sind und separat im Wesentlichen alle Kommissionierplätze anfahren können.

Die erfindungsgemäß verwendete Entnahmevorrichtung ermöglicht, eine ganze Reihe von vorzugsweise bodennahen Lagerplätzen als Bereitstellungslagerplätze zu qualifizieren, aus denen Kassetten zum Kommissionieren entnommen werden können. Dies ermöglicht eine parallele Kommissionierung, während herkömmlicherweise eine einzige oder höchstens zwei feststehende Bahnen an der Frontseite des Regals angeordnet sind, mit denen Kassetten aus einem oder gegebenenfalls zwei Bereitstellungslagerplätzen zum Kommissionieren aus dem Regal herausgefahren und wieder in dieses zurückgelagert werden können, soweit nicht die Kassetten ohnehin von Hand aus dem Regal gezogen werden.

Der Kommissionierwagen ermöglicht, aus einer Kassette entnommene Werkstücke im Kommissionierwagen zwischenzulagern und mit diesem zum entsprechenden Kommissionierplatz zu fahren, wo sie dann in eine dort abgestellte Kommissionierkassette oder ein Bodenlager abgelegt werden. Dies beschleunigt den entsprechenden Arbeitsvorgang nicht nur durch den Entfall von Laufwegen für die Bedienperson, sondern auch durch die Möglichkeit, mit mehreren Kommissionierplätzen sowie, im Zusammenspiel mit der Entnahmevorrichtung, auch mit mehreren Bereitstellungslagerplätzen parallel zu arbeiten. Die vorliegende Erfindung beschleunigt und flexibilisiert damit die Kommissionierung aus einem Wabenlager signifikant.

Eine weiter verbesserte Beschleunigung und Flexibilität beim Kommissionieren wird mit einer erfindungsgemäß bevorzugt verwendeten Entnahmevorrichtung erzielt, die mindestens zwei Arbeitsebenen aufweist, um wahlweise mit zwei oder mehr übereinander angeordneten Bereitstellungslagerplätzen des Regals zusammenzuarbeiten. Eine solche Entnahmevorrichtung ist außerdem mit einer Heb- und Senkeinrichtung zum Bewegen von Kassetten zwischen den Arbeitsebenen versehen, so dass die Entnahmevorrichtung alle Kommissionierplätze anfahren kann. Gleichzeitig sind gegenüber der herkömmlichen Kommissionierung noch mehr Bereitstellungslagerplätze möglich, die zum Kommissionieren zur Verfügung stehen.

Die Entnahmevorrichtung ist bevorzugt mit einer Längstraverse ausgestattet, die der Länge einer Kassette angepasst ist, so dass sie diese längs überspannt. Zweckmäßigerweise ist dann eine motorisch betriebene Manipuliervorrichtung zum Ziehen und Schieben einer Kassette entlang der Längstraverse vorhanden.

Da es erfindungsgemäß möglich ist, eine vergleichsweise große Anzahl von Bereitstellungslagerplätzen einzurichten, können Teilaufträge oder fertig kommissionierte Aufträge, die in einer Kassette zusammengestellt sind, in den Bereitstellungslagerplätzen zwischengelagert werden, so dass die entsprechenden Kommissionierplätze frei werden. Dies erhöht die Flexibilität beim Kommissionieren weiter. Beispielsweise könnte auch eine fertig kommissionierte Kassette vom Regalbediengerät aus dem Bereitstellungslagerplatz entnommen und an einen Lagerort im Wabenlager gebracht werden, um mit einer solchen Zwischenlagerung Randzeiten und Zeiten mit geringem Auftragseingang zum Kommissionieren weniger eiliger Aufträge zu nutzen.

Soweit die Entnahmevorrichtung nicht am Kommissionierwagen angeordnet, sondern von diesem unabhängig ist, ist es im Rahmen der vorliegenden Erfindung bevorzugt, wenn die Längstraverse der verwendeten Entnahmevorrichtung an ihren stirnseitigen Endbereichen mit jeweils einem mechanisch oder elektronisch geführten, insbesondere schienengebundenen Wagen verbunden ist, wobei die Wagen zusammen mit der Längstraverse einen lichten Raum unterhalb der Längstraverse bilden, der den Abmessungen einer Kassette angepasst ist, so dass die Entnahmevorrichtung Kassetten, die auf Kommissionierplätzen abgestellt sind, ungehindert überfahren kann. Zumindest der Wagen, der zur Frontseite des Regals hin angeordnet ist, sollte dann eine Öffnung oder eine Aussparung zum Durchziehen oder Durchschieben einer Kassette aufweisen, so dass die motorisch betriebene Manipuliervorrichtung an der Längstraverse die Kassetten ungehindert aus den Bereitstellungslagerplätzen entnehmen bzw. diese wieder dorthin einschieben kann. Soweit die Entnahmevorrichtung mit mehreren Arbeitsebenen ausgestattet ist, kann die Öffnung oder Aussparung im Wagen das Hindurchziehen oder Hindurchschieben einer Kassette in jeder Arbeitsebene ermöglichen.

Der erfindungsgemäß verwendete Kommissionierwagen weist vorzugsweise mindestens eine Zwischenablagestruktur zur Zwischenlagerung von Langgut auf. Die Zwischenablagestruktur besitzt eine Länge, die der Länge einer Kassette angepasst ist, um diese längs zu überspannen. Sie kann im Wesentlichen aus einer Traverse mit daran angeordneten Querstreben bestehen, so dass Langgut, das in einer Kassette gelagert ist, aus dieser entnommen und ganz einfach bis zur Traverse angehoben werden kann, um es schließlich auf den Querstreben der Traverse abzulegen. Nachdem der Kommissionierwagen dann an den entsprechenden Kommissionierplatz gefahren wurde, kann das Langgut von der Zwischenablagestruktur in die dortige Kassette gelegt werden.

Stirnseitig ist die Zwischenablagestruktur des verwendeten Kommissionierwagens bevorzugt mit einem mechanisch oder elektronisch geführten, insbesondere schienengeführten Wagenelement verbunden. Die Wagenelemente bilden zusammen mit der Zwischenablagestruktur einen lichten Raum unterhalb derselben, der den Abmessungen einer Kassette angepasst ist, so dass der Kommissionierwagen die Kassetten ungehindert überfahren kann, die auf Kommissionierplätzen abgestellt sind. So ist es möglich, dass der Kommissionierwagen unabhängig davon, ob die Kommissionierplätze leer oder belegt sind, jeden Kommissionierplatz anfahren kann.

Der verwendete Kommissionierwagen kann auch ohne Zwischenablagestruktur mit stirnseitigen Wagenelementen versehen sein, insbesondere dann, wenn er mit mindestens einem Manipulator, beispielsweise einem Roboter, für die Werkstücke ausgestattet ist. Damit kann die Kommissionierung dann vollständig ohne menschliche Arbeitskraft erfolgen.

Die insbesondere als Schienen ausgebildeten Führungen für die geführten Wagenelemente des verwendeten Kommissionierwagens sowie gegebenenfalls auch für die geführten Wagen der verwendeten Entnahmevorrichtung verlaufen zweckmäßigerweise in einem geringen Abstand vor den Stirnseiten der Kommissionierplätze bzw. der darauf abgestellten Kassetten in Querrichtung derselben, also parallel zur Frontseite des Regals.

Besonders bevorzugt weist der erfindungsgemäß verwendete Kommissionierwagen des Wabenlagers auf mindestens einem seiner Wagenelemente eine Bedienerplattform auf; besonders bevorzugt sind beide Wagenelemente mit jeweils einer Bedienerplattform versehen. Auf diesen Bedienerplattformen können sich jeweils ein oder mehrere Bedienpersonen aufhalten um Langgut aus Kassetten zu entnehmen und auf der Zwischenablagestruktur des Kommissionierwagens zwischenzulagern. Hierbei wird das Langgut stirnseitig von den vorzugsweise zwei Bedienpersonen gegriffen und angehoben. Am Kommissionierplatz wird das Langgut dann umgekehrt von der Zwischenablagestruktur des Kommissionierwagens genommen und in die auf dem Kommissionierplatz abgestellte Kassette eingelegt. Vorzugsweise kann von einer Bedienerplattform aus die Bewegung des Kommissionierwagens sowie gegebenenfalls auch die Bewegung der Entnahmevorrichtung gesteuert werden.

Die im erfindungsgemäßen Verfahren vorgesehenen Kommissionierplätze des Wabenlagers weisen bevorzugt Tragstrukturen für Kassetten auf, deren Niveau dem Niveau der untersten Bereitstellungslagerplätze im Regal im Wesentlichen entspricht. Die Kassetten können dann ganz einfach aus den Bereitstellungslagerplätzen heraus und auf die Tragstruktur der Kommissionsplätze gezogen werden sowie umgekehrt von den Kommissionierplätzen wieder in die Bereitstellungslagerplätze eingeschoben werden.

Anhand der beigefügten Zeichnungen werden im Folgenden vier Ausführungsbeispiele für ein erfindungsgemäß betriebenes Wabenlager und dessen Kommissioniereinrichtung mit Kommissionierwagen beschrieben und erläutert. Es zeigen:
- Figur 1: eine schematische isometrische Ansicht eines erfindungsgemäß betriebenen Wabenlagers in einem ersten Ausführungsbeispiel;
- Figur 2: ein Detail aus Figur 1, umfassend die Kommissioniereinrichtung des Wabenlagers;
- Figur 3: eine Frontansicht der Kommissioniereinrichtung aus Figur 2;
- Figur 4: eine Seitenansicht der Kommissioniereinrichtung aus Figur 2;
- Figur 5: eine isometrische Darstellung einer Kommissioniereinrichtung gemäß einem zweiten Ausführungsbeispiel;
- Figur 6: eine Frontansicht der Kommissioniereinrichtung aus Figur 5;
- Figur 7: eine Seitenansicht der Kommissioniereinrichtung aus Figur 5;
- Figur 8: eine isometrische Darstellung einer Kommissioniereinrichtung gemäß einem dritten Ausführungsbeispiel;
- Figur 9: eine Frontansicht der Kommissioniereinrichtung aus Figur 8;
- Figur 10: eine Seitenansicht der Kommissioniereinrichtung aus Figur 8;
- Figur 11: eine vereinfachte, schematische isometrische Darstellung einer Kommissioniereinrichtung nach dem zweiten Ausführungsbeispiel;
- Figur 12: eine vereinfachte, schematische isometrische Darstellung einer Kommissioniereinrichtung nach dem dritten Ausführungsbeispiel;
- Figur 13: eine vereinfachte, schematische isometrische Darstellung einer Kommissioniereinrichtung nach einem vierten Ausführungsbeispiel.

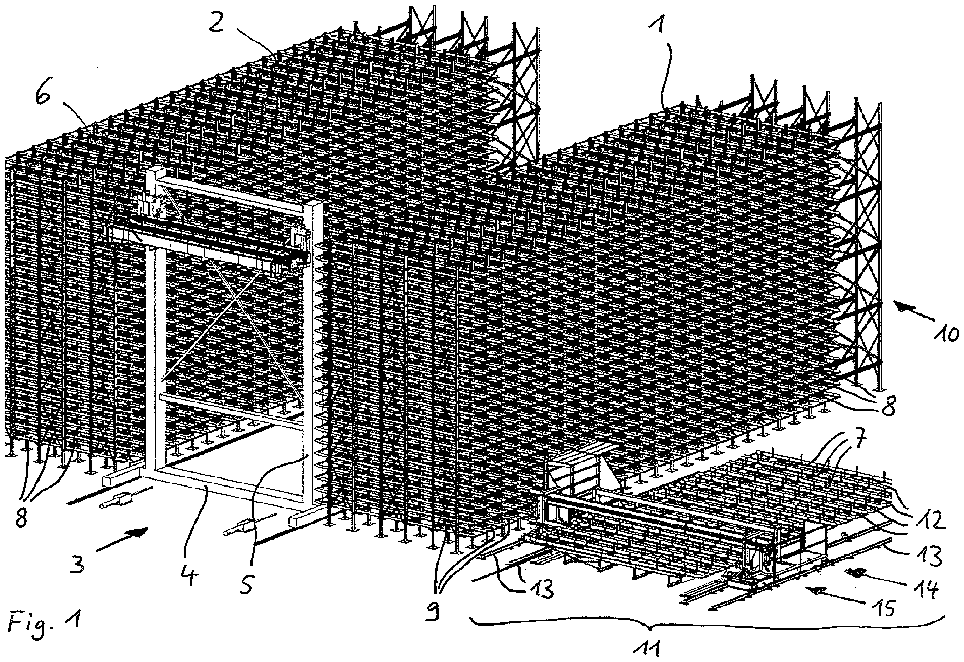

In Figur 1 ist in einer schematischen isometrischen Darstellung ein erstes Ausführungsbeispiel für ein erfindungsgemäß betriebenes Wabenlager zu sehen. Dieses Wabenlager ist insbesondere für Langgut vorgesehen und umfasst ein erstes Regal 1 und ein zweites Regal 2, zwischen denen in einer Regalgasse 3 ein Regalbediengerät 4 fahren kann. Dieses Regalbediengerät 4 besteht im Wesentlichen aus einem Fahrgestell 5, das sich entlang der Regalgasse 3 horizontal bewegen kann, sowie einem Hubschlitten 6, der am Fahrgestell 5 auf und ab beweglich ist und mit einer Lastaufnahmeeinheit versehen ist, die in der Lage ist, Kassetten 7, die vorliegend als Langgutkassetten ausgeführt sind, längs in einzelne Lagerplätze 8 im Wabenlager hineinzuschieben oder aus einzelnen Lagerplätzen 8 auf den Hubschlitten 6 hinauszuziehen.

Die Regale 1, 2 des Wabenlagers bestehen im Wesentlichen aus einer Anzahl von Stützen und einer Anzahl von Längs- und Querstreben, die eine Vielzahl von wabenartig angeordneten Lagerplätzen 8, hier in zeilen- und spaltenform angeordnet, bilden. Die Bedienseite der Regale 1, 2 ist zur Regalgasse 3 hin ausgerichtet, so dass das Regalbediengerät 4 jeden einzelnen Lagerplatz 8 anfahren und bedienen kann.

Die Kassetten 7 weisen zwei Stirnseiten und zwei Längsseiten auf, wobei die Stirnseiten signifikant kleinere Abmessungen als die Längsseiten besitzen. Die Regale 1, 2 des Wabenlagers verfügen, von der Regalgasse 3 aus gesehen, über eine große Tiefe, um die Kassetten 7 solcherart aufnehmen zu können, dass eine ihrer Stirnseiten zur Regalgasse 3 hin und somit zur Bedienseite hin orientiert ist. Die Kassetten 7 werden also längs in die Lagerplätze 8 eingeschoben. Wegen der vergleichsweise kleinen Abmessungen der Stirnseiten ergeben sich so besonders viele Lagerplätze 8, die vom Regalbediengerät 4 in der Regalgasse 3 angefahren werden können.

Um nun einen Kundenauftrag oder einen Produktionsauftrag kommissionieren zu können, entnimmt das Regalbediengerät 4 sukzessive die Kassetten 7 mit den benötigten, verschiedenen Werkstücken aus den Regalen 1, 2 und schiebt sie in freigehaltene, als Bereitstellungslagerplätze 9 qualifizierte, bodennahe Lagerplätze 8 ein. Diese Bereitstellungslagerplätze 9 sind zu einer Frontseite 10 des Regals hin offen, so dass sie auch an der Frontseite 10, die der Bedienseite des Regals 1 gegenüberliegt, aus dem Regal 1 entnommen werden können.

Vor der Frontseite 10 des Regals 1 befindet sich eine Kommissioniereinrichtung 11, bestehend aus einer Mehrzahl von Kommissionierplätzen 12 für Kassetten 7, quer verlaufenden Schienen 13 und einem auf den Schienen 13 laufenden Kommissionierwagen 14, der nach dem hier dargestellten, ersten Ausführungsbeispiel mit einer Entnahmevorrichtung 15 kombiniert ist.

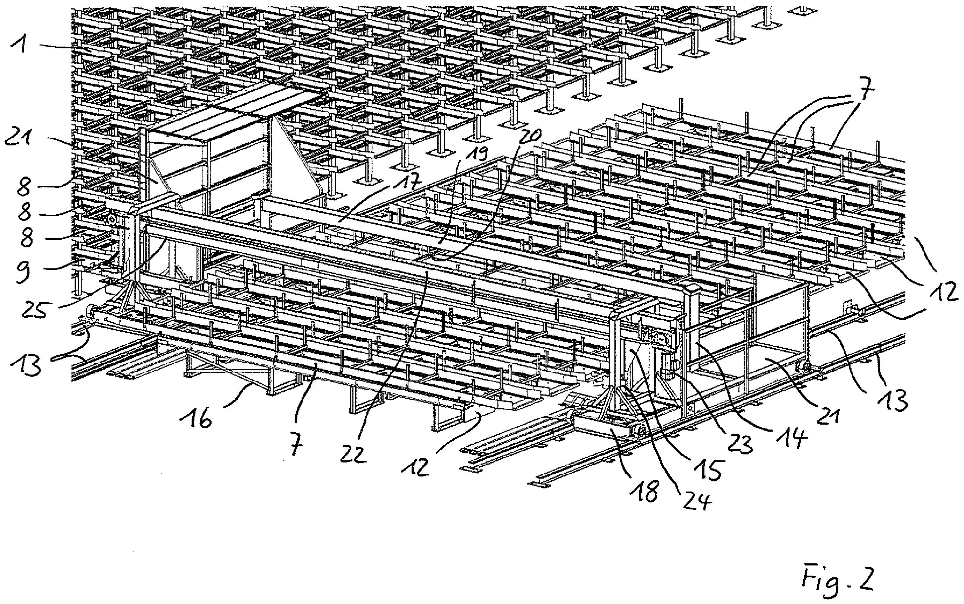

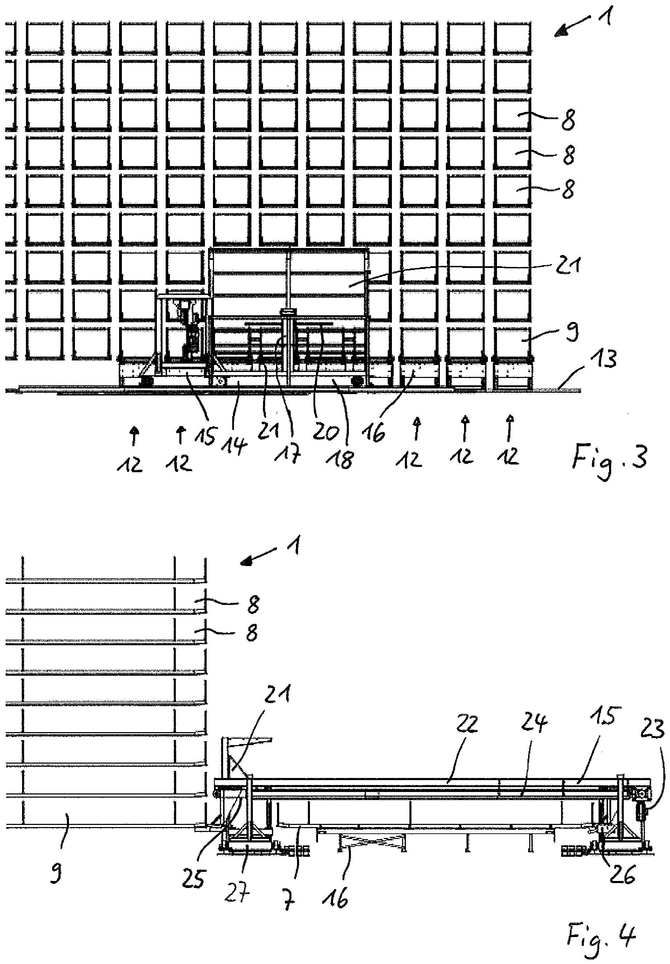

In Figur 2, einer Detailvergrößerung aus Figur 1, sind die Kommissioniereinrichtung 11 und ihre Bestandteile besser erkennbar. Eine Mehrzahl von Kommissionierplätzen 12 ist von jeweils einer Kassette 7 belegt, die auf jeweils einer Tragstruktur 16 sitzen, um eine Niveaugleichheit mit den Bereitstellungslagerplätzen 9 des Regals 1 herzustellen. Dies ist in den Figuren 3 und 4 verdeutlicht, welche eine Frontansicht und eine Seitenansicht der in Figur 2 dargestellten Kommissioniereinrichtung 11 zeigen.

Wie aus den Figuren 2, 3 und 4 ersichtlich, besteht der Kommissionierwagen 14 im Wesentlichen aus einer Zwischenablagestruktur 17, die stirnseitig jeweils mit einem schienengeführten Wagenelement 18 verbunden ist und mit diesem zusammen einen lichten Raum bildet, der den Abmessungen der auf den Kommissionierplätzen 12 abgestellten Kassetten 7 angepasst ist. Diese werden von der Zwischenablagestruktur 17 längs überspannt, und mit Hilfe der Wagenelemente 18, die auf den Schienen 13 laufen, kann der Kommissionierwagen 14 auch dann alle Kommissionierplätze 12 anfahren, wenn diese mit Kassetten 7 belegt sind.

Die Zwischenablagestruktur 17 des Kommissionierwagens 14 besteht ihrerseits im Wesentlichen aus einer Traverse 19, an der in regemäßigen Abständen Querstreben 20 angebracht sind, um dort Langgut zwischenlagern zu können.

Auf beiden Wagenelementen 18 sind Bedienerplattformen 21 angebracht, auf denen Bedienpersonen Platz finden, mit dem Kommissionierwagen 14 mitfahren können und von denen aus die Bedienpersonen in der Lage sind, Langgut aus einer Kassette 7 jeweils stirnseitig zu erfassen, anzuheben und auf den Querstreben 20 der Zwischenablagestruktur 17 abzulegen, und umgekehrt.

Es ist also beispielsweise möglich, Werkstücke aus einer Kassette 7, die beispielsweise auf dem ganz links dargestellten Kommissionierplatz 12 sitzt, mit dem Kommissionierwagen 14 aufzunehmen, auf dessen Zwischenablagestruktur 17 zwischenzulagern und in mehrere Kommissionen, die sich in den anderen Kassetten 7 auf den Kommissionierplätzen 12 befinden, einzusortieren. Da im vorliegenden Beispiel alle Lagerplätze 8 des Regals 1, die sich in Flucht mit den Kommissionierplätzen 12 befinden, als Bereitstellungslagerplätze 9 qualifiziert sind, können außerdem mehr als eine Kassette 7 mit zu verteilenden Werkstücken aus dem Regal 1 gezogen werden, um mit Hilfe des Kommissionierwagens 14 Werkstücke zu entnehmen und auf weitere Kommissionierplätze 12 zu verteilen. Es ist auch möglich, einen fertig kommissionierten Auftrag, der sich in einer Kassette 7 auf einem Kommissionierplatz 12 befindet, in einen Bereitstellungslagerplatz 9 zurückzuschieben, von wo er mittels des Regalbediengeräts 4 in einen beliebigen Lagerplatz 8 im Wabenlager verbracht werden kann, um zu einem späteren Zeitpunkt wieder aus dem Wabenlager geholt zu werden.

Der in den Figuren 2, 3 und 4 dargestellte Kommissionierwagen 14 verfügt neben der Zwischenablagestruktur 17, den beiden Wagenelementen 18 und den Bedienerplattformen 21 außerdem über eine Entnahmevorrichtung 15, die ebenfalls auf den Wagenelementen 18 sitzt und zusammen mit dem Kommissionierwagen 14 entlang der Schienen 13 quer verfahrbar ist. Die Entnahmevorrichtung 15 besteht hier im Wesentlichen aus einer Längstraverse 22 und einer mittels eines Elektromotors 23 motorisch betriebenen Manipuliervorrichtung 24 zum Ziehen und Schieben einer Kassette 7 entlang der Längstraverse 22. Diese Manipuliervorrichtung 24 umfasst eine Führung mit einer umlaufenden Rollenkette 25 sowie einen daran angebrachten Manipulator 26, mit dem die Kassetten 7 entlang der Längstraverse 22 gezogen und geschoben werden können, um sie von einem Kommissionierplatz 12 in einen Bereitstellungslagerplatz 9 umzulagern und umgekehrt. Das Wagenelement 18 des Kommissionierwagens 14, das zur Frontseite 10 des Regals hin orientiert ist, ist hierzu mit einer Öffnung versehen, die vorliegend schlicht der lichte Raum zwischen den Stützen ist, die die Längstraverse 22 tragen, um ein Durchziehen oder Durchschieben von Kassetten 7 zu ermöglichen.

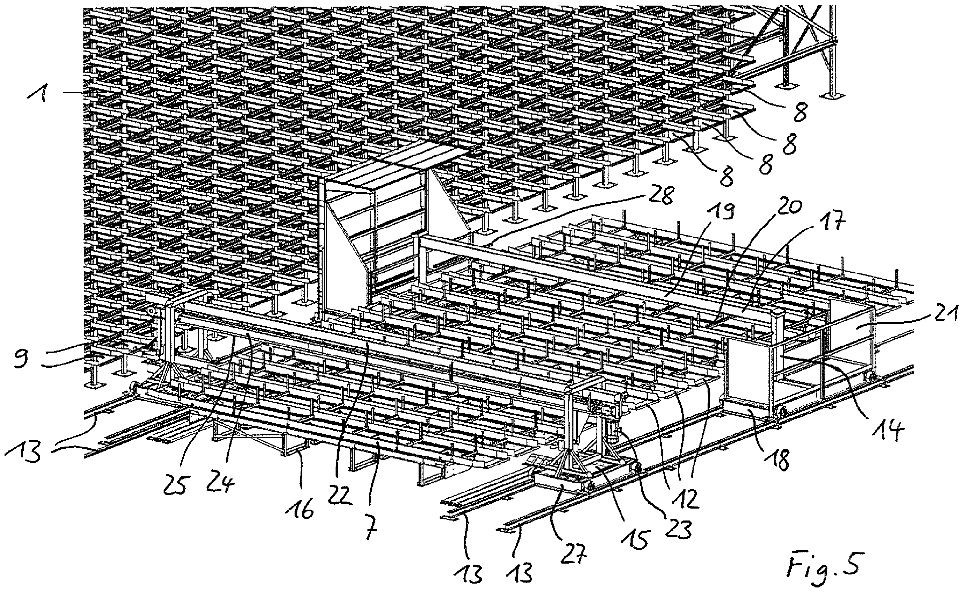

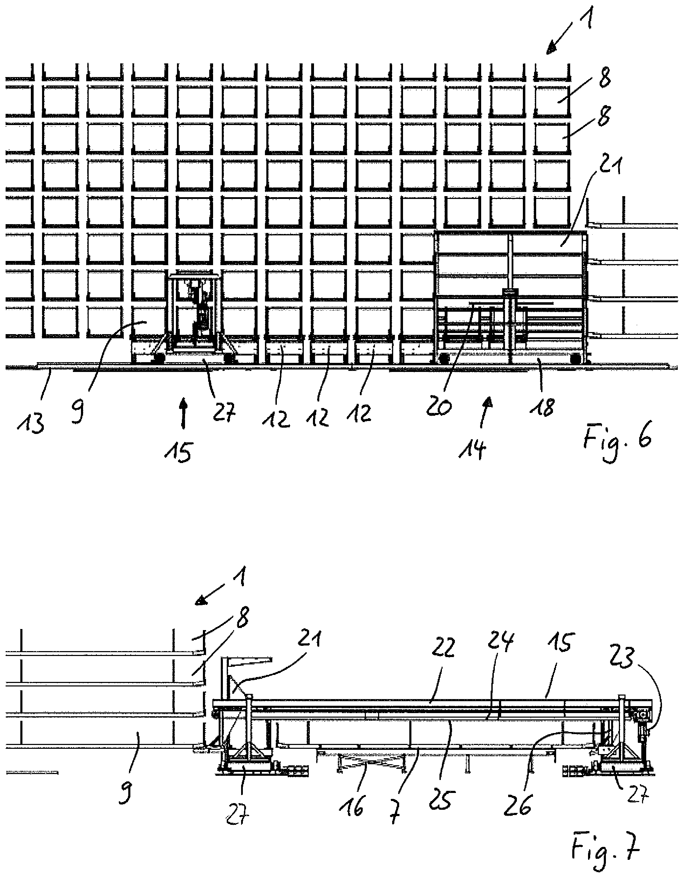

In den Figuren 5, 6 und 7 ist in einer isometrischen Ansicht, einer Frontansicht und einer Seitenansicht eine Kommissioniereinrichtung 11 dargestellt, die ein zweites Ausführungsbeispiel verkörpert. Der Unterschied zu dem in den Figuren 1 bis 4 dargestellten Ausführungsbeispiel besteht darin, dass der Kommissionierwagen 14 und die Entnahmevorrichtung 15 separate Vorrichtungen sind und unabhängig voneinander entlang den Schienen 13 bewegt werden können. Hierzu verfügt die Entnahmevorrichtung 15 über eigene schienengebundene Wagen 27, die die Längstraverse 22 sowie die Manipuliervorrichtung 24 tragen und mit diesen zusammen einen lichten Raum bilden, mittels dessen die Entnahmevorrichtung 15, die Kommissionierplätze 12 und die darauf abgesetzten Kassetten 7 längs überspannend, in die Lage versetzt ist, die Kommissionierplätze 12 mit Kassetten 7 quer zu überfahren. Die Entnahmevorrichtung 15 ist von einem Bedienpanel 28, das auf einer der beiden Bedienerplattformen 21 des Kommissionierwagens 14 angeordnet ist, ansteuerbar.

Der Aufbau der Entnahmevorrichtung 15 an sich, sowie der Aufbau des Kommissionierwagens 14 an sich sind gegenüber dem ersten Ausführungsbeispiel aus den Figuren 1 bis 4 ansonsten unverändert geblieben, so dass auf die obige Beschreibung verwiesen werden kann.

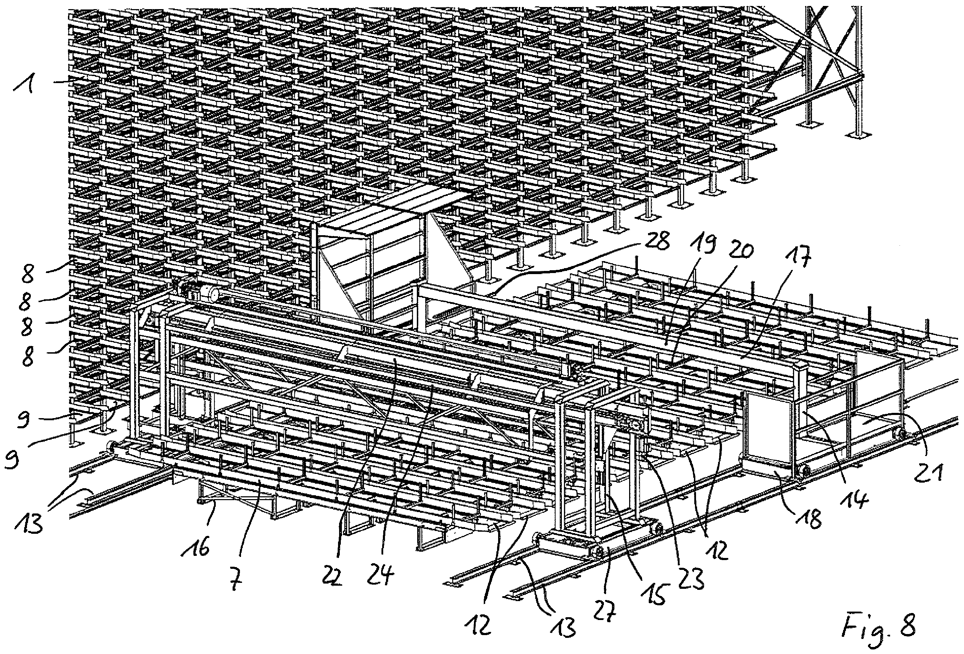

Die Figuren 8, 9 und 10 zeigen wiederum in einer isometrischen Darstellung, einer Frontansicht und einer Seitenansicht ein drittes Ausführungsbeispiel. Dieses unterscheidet sich von den beiden vorangehenden Ausführungsbeispielen wiederum durch eine abweichende Ausgestaltung der Kommissioniereinrichtung 11.

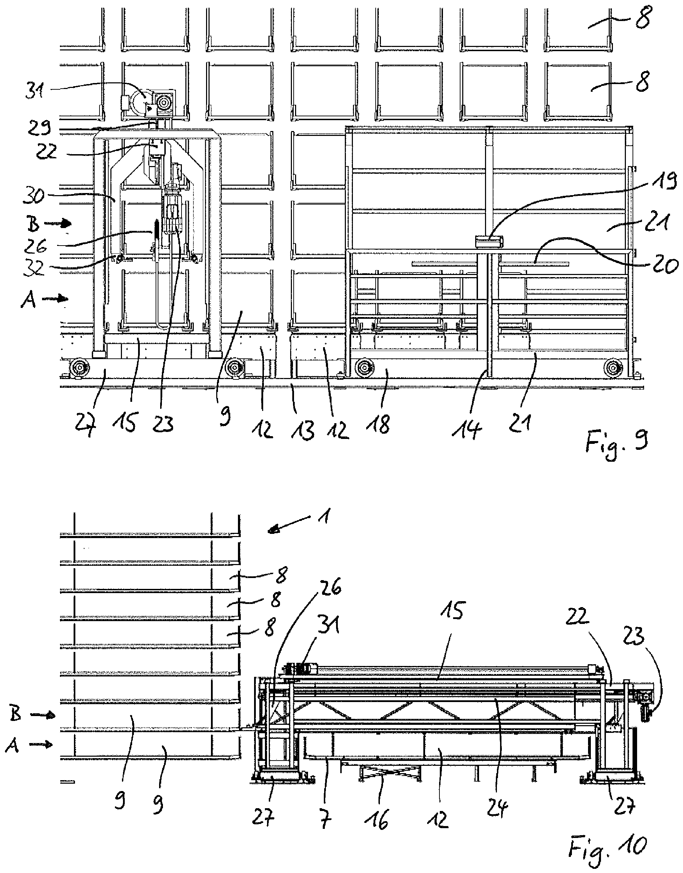

Wie beim zweiten Ausführungsbeispiel, sind auch bei diesem dritten Ausführungsbeispiel der Kommissionierwagen 14 und die Entnahmevorrichtung 15 separate Vorrichtungen, die unabhängig voneinander entlang der Schienen 13 bewegbar sind. Während der Kommissionierwagen 14 identisch mit dem Kommissionierwagen aus dem zweiten Ausführungsbeispiel ist, ist die Entnahmevorrichtung 15 im vorliegenden dritten Ausführungsbeispiel modifiziert. Denn diese Entnahmevorrichtung 15 weist zwei Arbeitsebenen A und B auf (Figur 9), so dass mit dieser Entnahmevorrichtung 15 Kassetten aus den beiden untersten Ebenen des Regals 1 entnommen werden können. Somit hat sich die Anzahl der möglichen Bereitstellungslagerplätze 9 im Regal 1 verdoppelt.

Die beiden Arbeitsebenen A, B der Entnahmevorrichtung 15 werden von ein und derselben Manipuliervorrichtung 24 bedient; denn die Entnahmevorrichtung 15 verfügt über ein Hubwerk 29, das aus Tragarmen 30 und einem Hubantrieb 31 besteht, welche Tragarme 30 mittels abklappbarer Hebel 32 gleichzeitig eine Halterung für Kassetten 7 bilden, die in der oberen Arbeitsebene B gehalten werden. Die Tragarme 30 sind an der Längstraverse 22 angebracht, und die Längstraverse 22 wird mitsamt der Manipuliervorrichtung ebenfalls vom Hubwerk 29 und seinem Hubantrieb 31 zwischen den Arbeitsebenen A und B bewegt, so dass die Entnahmevorrichtung 15 in beiden Ebenen A, B mit den jeweiligen Bereitstellungslagerplätzen 9 zusammenarbeiten kann.

Die zweite Arbeitsebene B bietet außerdem den Vorteil, dass die Entnahmevorrichtung 15 eine aus einem Bereitstellungslagerplatz 9 entnommene Kassette in die obere Arbeitsebene B anheben oder dort belassen kann, um mitsamt dieser Kassette 7 alle Kommissionierplätze 12 zu überfahren, auch wenn auf diesen weitere Kassetten 7 abgestellt sind. Eine Entnahmevorrichtung 15, die nur in einer Ebene arbeitet, kann hingegen Kassetten 7 immer nur zwischen in Flucht liegenden Bereitstellungslagerplätzen 9 und Kommissionierplätzen 12 hin und her bewegen. Dieses dritte Ausführungsbeispiel erhöht die Flexibilität beim Kommissionieren also weiter.

Neben diesen drei Ausführungsbeispielen liegen naturgemäß noch weitere Abwandlungen im Rahmen der vorliegenden Erfindung. Beispielsweise kann der Kommissionierwagen 14 mit einer integrierten Entnahmevorrichtung 15 ausgestattet sein, die zwei Arbeitsebenen A, B aufweist. Wenn Werkstücke kommissioniert werden sollen, die zu schwer sind, um von zwei Bedienpersonen händisch in der Zwischenablagestruktur 17 des Kommissionierwagens 14 zwischengepuffert zu werden, kann der Kommissionierwagen 14 mit Hilfsaggregaten, beispielsweise einem Brückenkran ausgestattet sein. Anstatt die Werkstücke durch Bedienpersonen zu komissionieren, kann ein Kommissionierwagen auch mit Manipulatoren, beispielsweise einem Industrieroboter ausgestattet sein. Die Entnahmevorrichtung 15 kann beispielsweise mit zwei unabhängig arbeitenden Manipuliervorrichtungen versehen sein, wenn sie zwei Arbeitsebenen A, B umfasst, um die Flexibilität noch weiter zu erhöhen, oder sie kann mehr als zwei Arbeitsebenen aufweisen und dergleichen mehr.

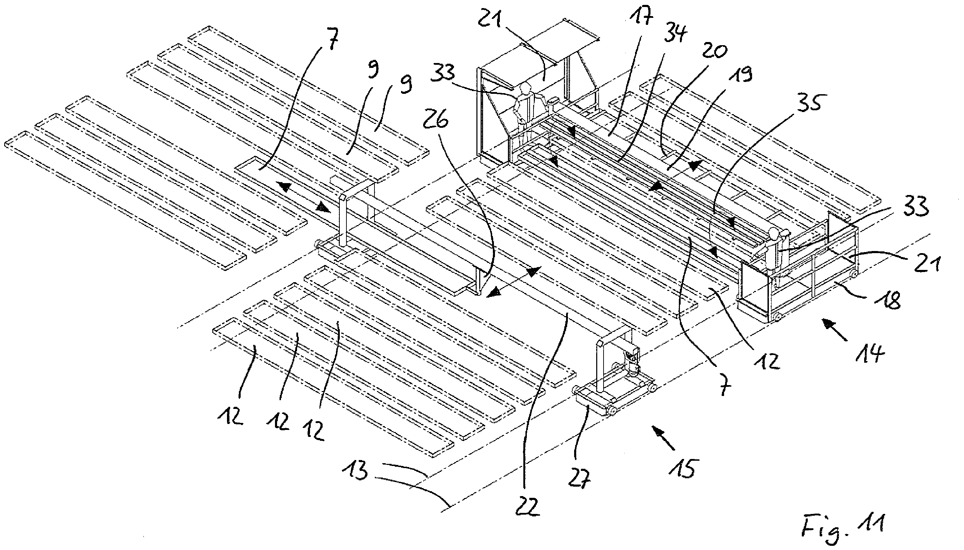

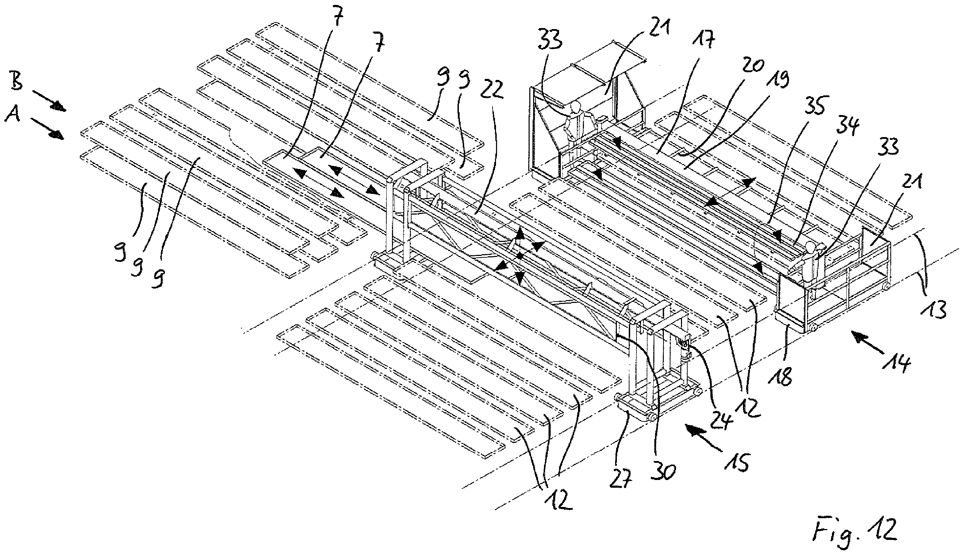

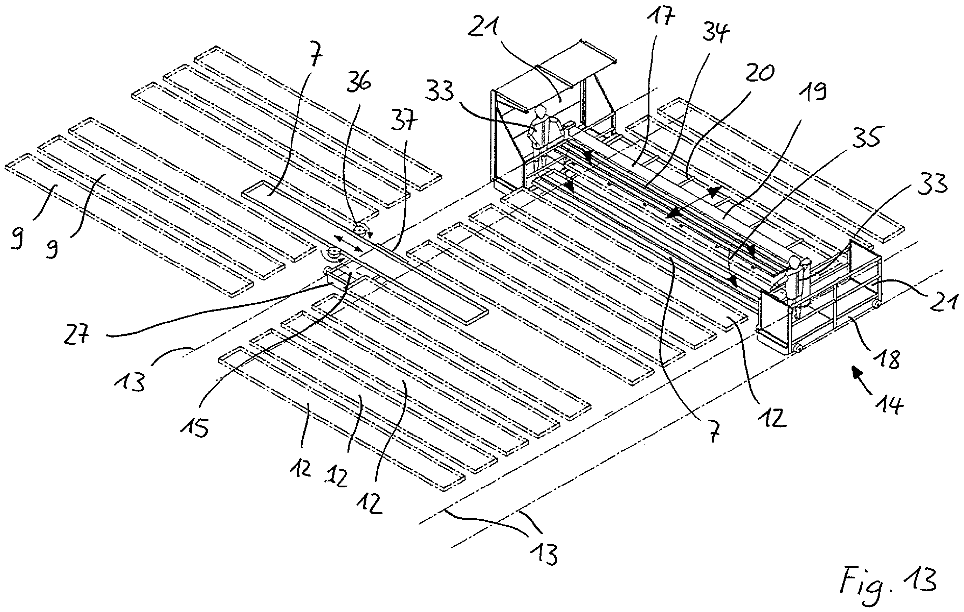

Die Figuren 11, 12 und 13 zeigen schließlich anhand vereinfachter Darstellungen von Kommissioniereinrichtungen 11 die Arbeitsabläufe beim erfindungsgemäßen Kommissionieren im Wabenlager nach dem zweiten Ausführungsbeispiel (Figur 11) bzw. nach dem dritten Ausführungsbeispiel (Figur 12) bzw. nach einem vierten Ausführungsbeispiel (Figur 13).

In diesen Figuren sind zwei Bedienpersonen 33 dargestellt, die sich auf dem Kommissionierwagen 14 bzw. auf dessen beiden Bedienerplattformen 21 befinden. Auf der Zwischenablagestruktur 17 des Kommissionierwagens 14 sind drei Profile 34 zwischengelagert, die auf den Querstreben 20 der Zwischenablagestruktur 17 liegen. Wie durch Doppelpfeile 35 angedeutet, können die Profile 34 von den Bedienpersonen 33 händisch von der Zwischenablagestuktur 17 weggenommen und in eine Kassette 7 gelegt werden, die auf dem aktuellen Kommissionierplatz 12 sitzt. Beispielsweise wird hier ein Profil in die Kassette 7 abgelegt, und dann der Kommissionierwagen 14 an einen benachbarten Kommissionierplatz 12 gefahren, wo das nächste Profil 34 in die dortige Kassette 7 abgelegt wird. Umgekehrt können Profile 34 aus einer Kassette 7 entnommen und auf der Zwischenablagestruktur 17 des Kommissionierwagens 14 abgelegt werden, um sie in die verschiedenen Kommissionen zu verteilen.

Gleichzeitig und unabhängig vom Kommissionierwagen 14 ist die Entnahmevorrichtung 15 dabei, eine Kassette 7 aus einem Bereitstellungslagerplatz 9 des (hier nicht dargestellten) Regals zu holen und auf einen Kommissionierplatz 12 zu ziehen. Dies erfolgt bei den Entnahmevorrichtungen der Figuren 11 und 12 mittels des Manipulators 26, der entlang der Längstraverse 22 motorisch bewegbar ist. Der Manipulator 26 ist mit einer Klinke versehen, die die Kassette 7 ziehen und schieben kann und von dieser wieder lösbar ist.

Wie durch Doppelpfeile angedeutet, können sowohl die Entnahmevorrichtung 15 als auch der Kommissionierwagen 14, die die Kassetten 7 auf den Kommissionierplätzen 12 jeweils überspannen, quer zu allen Kommissionierplätzen 12 verfahren werden.

Die in Figur 12 dargestellte Entnahmevorrichtung 15 verfügt hierbei über zwei Arbeitsebenen A, B, zwischen denen mittels eines Hubwerks gewechselt werden kann, indem die Längstraverse 22 mitsamt der Manipuliervorrichtung 24 sowie Tragarmen 30 auf und ab bewegt wird.

Das in Figur 13 dargestellte vierte Ausführungsbeispiel unterscheidet sich vom zweiten Ausführungsbeispiel lediglich durch eine andere Ausbildung der Entnahmevorrichtung 15. Diese besteht im Wesentlichen aus nur einem schienengebundenen Wagen 27, auf dem die motorisch betriebene Manipuliervorrichtung zum Ziehen und Schieben einer Kassette 7 als Reibradantrieb 36 ausgebildet ist. Dieser besteht im Wesentlichen aus zwei motorisch betriebenen Reibrädern, die eine Kassette 7 zwischen sich bewegen können. Mindestens eine Längsführung 37 sorgt für eine korrekt ausgerichtete Bewegung der Kassetten 7. Eine Längstraverse 22 kann hier entfallen, was die Entnahmevorrichtung 15 konstruktiv stark vereinfacht.

## Patentansprüche

1. Verfahren zum Betreiben eines Wabenlagers, welches umfasst:
- mindestens ein Regal (1), das eine Mehrzahl von nebeneinander und übereinander angeordneten, von einer Bedienseite zugänglichen Lagerplätzen (8) zur Aufnahme von Kassetten (7) aufweist, wobei die Lagerplätze (8) so ausgestaltet sind, dass die Kassetten (7) an der Bedienseite in Längsrichtung horizontal aus den Lagerplätzen (8) entnehmbar und in diese einbringbar sind,
- ein Regalbediengerät (4) an der Bedienseite des Regals (1) und
- eine Kommissioniereinrichtung (11), die auf einer der Bedienseite gegenüber liegenden Frontseite (10) des Regals (1) angeordnet und einer Anzahl von als Bereitstellungslagerplätzen (9) verwendeten Lagerplätzen (8) zugeordnet ist, wobei die Bereitstellungslagerplätze (9) so ausgestaltet sind, dass darin befindliche Kassetten (7) auch an der Frontseite (10) des Regals (1) entnommen werden können,
**dadurch gekennzeichnet,**
**dass** die Kommissioniereinrichtung (11) mehrere Kommissionierplätze (12) zum Abstellen von Kassetten (7), sowie einen entlang der Frontseite (10) des Regals (1), in Querrichtung der Kassetten (7) verfahrbaren Kommissionierwagen (14) umfasst, der so ausgebildet ist, dass er alle Kommissionierplätze (12) anfahren kann,
wobei die Kommissioniereinrichtung (11) außerdem eine entlang der Frontseite (10) des Regals (1), in Querrichtung der Kassetten (7) verfahrbare Entnahmevorrichtung (15) zum Herausziehen und Einschieben von Kassetten (7) aus den und in die Bereitstellungslagerplätze (9) aufweist, wobei zum Kommissionieren der Kommissionierwagen (14) und die Entnahmevorrichtung (15) entlang der Frontseite (10) des Regals (1), in Querrichtung der Kassetten (7) verfahren werden,
wobei die Entnahmevorrichtung (15) eine Kassette (7) aus einem Bereitstellungslagerplatz (9) des Regals (1) holt und auf einen Kommissionierplatz (12) zieht,
und wobei aus einer Kassette (7) entnommene Werkstücke im Kommissionierwagen (14) zwischengelagert und mit dem Kommissionierwagen (14) zum entsprechenden Kommissionierplatz (12) gefahren werden, wo die Werkstücke dann in eine dort abgestellte Kommissionierkassette oder ein Bodenlager abgelegt werden.

2. Verfahren nach Anspruch 1,
wobei eine Entnahmevorrichtung (15) verwendet wird, die am Kommissionierwagen (14) angeordnet ist.

3. Verfahren nach Anspruch 1,
wobei eine Entnahmevorrichtung (15) verwendet wird, die vom Kommissionierwagen (14) unabhängig ist.

4. Verfahren nach mindestens einem der Ansprüche 1 bis 3,
wobei eine Entnahmevorrichtung (15) verwendet wird, die mindestens zwei Arbeitsebenen (A, B) aufweist, um wahlweise mit zwei oder mehr übereinander angeordneten Bereitstellungslagerplätzen (9) des Regals (1) zusammenzuarbeiten, und die mit einer Heb- und Senkeinrichtung zum Bewegen von Kassetten (7) zwischen den Arbeitsebenen (A, B) versehen ist.

5. Verfahren nach mindestens einem der Ansprüche 1 bis 4,
wobei eine Entnahmevorrichtung (15) verwendet wird, die eine Längstraverse (22) umfasst, die der Länge einer Kassette (7) angepasst ist, um diese längs zu überspannen, und die mit einer motorisch betriebenen Manipuliervorrichtung (24) zum Ziehen und Schieben einer Kassette (7) entlang der Längstraverse (22) versehen ist.

6. Verfahren nach den Ansprüchen 3 und 5,
wobei eine Entnahmevorrichtung (15) verwendet wird, deren Längstraverse (22) an ihren stirnseitigen Endbereichen mit jeweils einem mechanisch oder elektronisch geführten, insbesondere schienengebundenen Wagen (27) verbunden ist, wobei die Wagen (27) zusammen mit der Längstraverse (22) einen lichten Raum unterhalb der Längstraverse (22) bilden, der, zum ungehinderten Überfahren von auf Kommissionierplätzen (12) abgestellten Kassetten (7), den Abmessungen einer solchen Kassette (7) angepasst ist.

7. Verfahren nach mindestens einem der Ansprüche 1 bis 6,
wobei ein Kommissionierwagen (14) verwendet wird, der mindestens eine Zwischenablagestruktur (17) zur Zwischenlagerung von Langgut aufweist, deren Länge der Länge einer Kassette (7) angepasst ist, um diese längs zu überspannen, wobei die Zwischenablagestruktur (17) an ihren stirnseitigen Endbereichen jeweils mit einem mechanisch oder elektronisch geführten, insbesondere schienengeführten Wagenelement (18) verbunden ist, welche Wagenelemente (18) zusammen mit der Zwischenablagestruktur (17) einen lichten Raum unterhalb der Zwischenablagestruktur (17) bilden, der, zum ungehinderten Überfahren von auf Kommissionierplätzen (12) abgestellten Kassetten (7), den Abmessungen einer Kassette (7) angepasst ist, und wobei die Zwischenablagestruktur (17) des Kommissionierwagens (14) insbesondere im Wesentlichen aus einer Traverse (19) mit daran angeordneten Querstreben (20) besteht.

8. Verfahren nach mindestens einem der Ansprüche 1 bis 7,
wobei ein Kommissionierwagen (14) verwendet wird, der eine Länge aufweist, die der Länge einer Kassette (7) angepasst ist, um diese längs zu überspannen, und der an seinen stirnseitigen Endbereichen jeweils ein mechanisch oder elektronisch geführtes, insbesondere schienengeführtes Wagenelement (18) aufweist, wobei mindestens eines dieser Wagenelemente (18) mit einer Bedienerplattform (21) versehen ist und/oder wobei der Kommissionierwagen (14) mit mindestens einem Manipulator für in den Kassetten (7) gelagerte Werkstücke ausgestattet ist.

9. Verfahren nach mindestens einem der Ansprüche 1 bis 8,
wobei die Kommissionierplätze (12) durch Tragstrukturen (16) für Kassetten (7) gebildet werden, wobei das Niveau der Tragstrukturen (16) dem Niveau der untersten Bereitstellungslagerplätze (9) im Regal (1) im Wesentlichen entspricht.

## Claims

1. Method for operating a honeycomb storage system comprising:
- at least one shelf (1) having a plurality of storage units (8) arranged side by side and above one another and accessible from an operating side to receive cartridges (7), whereby the storage units (8) are designed such that on the operating side the cartridges (7) can be removed from the storage units (8) and can be inserted therein horizontally in a longitudinal direction,
- a shelf operating device (4) on the operating side of the shelf (1) and
- an order picking device (11), which is arranged on a front side (10) of the shelf (1) located opposite the operating side, and is assigned to a plurality of storage units (8) used as provisioning storage units (9), whereby the provisioning storage units (9) are designed such that cartridges (7) located therein can also be removed on the front side (10) of the shelf (1),
**characterised in**
**that** the order picking device (11) comprises a plurality of order picking units (12) in which cartridges (7) can be placed, and an order picking cart (14) which can move along the front side (10) of the shelf (1), in a transverse direction relative to the cartridges (7) and is designed to be able to approach all of the order picking units (12),
whereby the order picking device (11) also comprises a removal device (15) which can be moved along the front side (10) of the shelf (1) in a transverse direction relative to the cartridges (7) in order to pull cartridges (7) out of the provisioning storage units (9) and to insert cartridges therein, whereby, for the order picking, the order picking cart (14) and the removal device (15) are moved along the front side (10) of the shelf (1), in a transverse direction relative to the cartridges (7),
whereby the removal device (15) pulls a cartridge (7) out of a provisioning storage unit (9) of the shelf (1) and places it onto an order picking unit (12),
and whereby workpieces removed from a cartridge (7) are stored temporarily in the order picking cart (14) and are moved by the order picking cart (14) to the corresponding order picking unit (12), where the workpieces are then placed into an order picking cartridge set down there or a floor storage unit.

2. Method according to claim 1,
whereby a removal device (15) is used which is arranged on the order picking cart (14).

3. Method according to claim 1,
whereby a removal device (15) is used which is independent of the order picking cart (14).

4. Method according to at least one of claims 1 to 3,
whereby a removal device (15) is used which has at least two operating levels (A, B) in order to interact selectively with two or more provisioning storage units (9) which are arranged above one another on the shelf (1), and which is provided with a lifting and lowering device for moving cartridges (7) between the operating levels (A, B).

5. Method according to at least one of claims 1 to 4,
whereby a removal device (15) is used which comprises a longitudinal crossbeam (22) which is adapted to the length of a cartridge (7) in order to span the cartridge longitudinally and is provided with a motor-driven manipulation device (24) for pulling and pushing a cartridge (7) along the longitudinal crossbeam (22).

6. Method according to claims 3 and 5,
whereby the longitudinal crossbeam (22) of the removal device (15) is connected at each of its end regions to a cart (27) which is guided mechanically or electronically, in particular rail-bound, whereby the carts (27) together with the longitudinal crossbeam (22) form a clear space below the longitudinal crossbeam (22) which is adapted to the dimensions of one of the cartridges (7) for the unhindered transfer of cartridges (7) placed on order picking units (12).

7. Method according to at least one of claims 1 to 6,
whereby an order picking cart (14) is used which comprises at least one intermediate storage structure (17) for interim storage of long goods, the length of which is adapted to the length of a cartridge (7) in order to span the cartridge longitudinally, whereby the intermediate storage structure (17) is connected at each of its end regions to respective mechanically or electronically guided, in particular rail-guided, cart elements (18), which cart elements (18) together with the intermediate storage structure (17) form a clear space below the intermediate storage structure (17) which, for the unhindered transfer of cartridges (7) placed on order picking units (12), is adapted to the dimensions of a cartridge (7), and whereby the intermediate storage structure (17) of the order picking cart (14) consists in particular substantially of a crossbeam (19) with transverse struts (20) arranged thereon.

8. Method according to at least one of claims 1 to 7,
whereby an order picking cart (14) is used which has a length adapted to the length of a cartridge (7) in order to span the cartridge longitudinally, and which has on each of its end regions a mechanically or electronically guided, in particular rail-guided cart element (18), whereby at least one of these cart elements (18) is provided with an operator platform (21) and/or whereby the order picking cart (14) is equipped with at least one manipulator for workpieces stored in the cartridges (7).

9. Method according to at least one of claims 1 to 8,
whereby the order picking units are formed (12) by support structures (16) for cartridges (7), whereby the level of the support structure (16) substantially corresponds to the level of the lowest provisioning storage units (9) in the shelf (1).

## Revendications

1. Procédé de fonctionnement d'un magasin en nid d'abeilles, lequel comprend :
- au moins une étagère (1) qui présente une pluralité d'emplacements de stockage (8) agencés les uns à côté des autres et les uns au-dessus des autres et accessibles depuis un côté de service et permettant d'accueillir des cassettes (7), dans lequel les emplacements de stockage (8) sont conçus de sorte que les cassettes (7) peuvent être retirées des emplacements de stockage (8), et être introduites dans ceux-ci, de manière horizontale dans la direction longitudinale au niveau du côté de service,
- un transstockeur (4) au niveau du côté de service de l'étagère (1), et
- un dispositif de préparation de commandes (11) qui est agencé sur un côté avant (10), situé à l'opposé du côté de service, de l'étagère (1) et qui est associé à un certain nombre d'emplacements de stockage (8) utilisés comme emplacements de stockage de mise à disposition (9), dans lequel les emplacements de stockage de mise à disposition (9) sont conçus de sorte que des cassettes (7) qui s'y trouvent peuvent également être retirées au niveau du côté avant (10) de l'étagère (1),
**caractérisé en ce que**
le dispositif de préparation de commandes (11) comprend plusieurs emplacements de préparation de commandes (12) permettant de remiser des cassettes (7), ainsi qu'un chariot de préparation de commandes (14) pouvant être déplacé dans la direction transversale des cassettes (7) le long du côté avant (10) de l'étagère (1), qui est réalisé de sorte qu'il peut atteindre tous les emplacements de préparation de commandes (12),
dans lequel le dispositif de préparation de commandes (11) présente en outre un dispositif de retrait (15) pouvant être déplacé le long du côté avant (10) de l'étagère (1) dans la direction transversale des cassettes (7) pour retirer des cassettes (7) hors des emplacements de stockage de mise à disposition (9) et les insérer dans ceux-ci,
dans lequel le chariot de préparation de commandes (14) et le dispositif de retrait (15) sont déplacés le long du côté avant (10) de l'étagère (1) dans la direction transversale des cassettes (7) afin de préparer des commandes,
dans lequel le dispositif de retrait (15) récupère une cassette (7) provenant d'un emplacement de stockage de mise à disposition (9) de l'étagère (1) et la tire sur un emplacement de préparation de commande (12),
et dans lequel des pièces d'œuvre retirées d'une cassette (7) sont stockées temporairement dans le chariot de préparation de commandes (14) et sont déplacées avec le chariot de préparation de commandes (14) vers l'emplacement de préparation de commandes (12) correspondant, où les pièces d'œuvre sont ensuite rangées dans une cassette de préparation de commande qui y est remisée ou sur un emplacement de stockage au sol.

2. Procédé selon la revendication 1,
dans lequel un dispositif de retrait (15) agencé au niveau du chariot de préparation de commandes (14) est utilisé.

3. Procédé selon la revendication 1,
dans lequel un dispositif de retrait (15) indépendant du chariot de préparation de commandes (14) est utilisé.

4. Procédé selon au moins l'une quelconque des revendications 1 à 3,
dans lequel un dispositif de retrait (15) est utilisé, qui présente au moins deux plans de travail (A, B) afin de coopérer de manière sélective avec deux ou plus de deux emplacements de stockage de mise à disposition (9), agencés l'un au-dessus de l'autre, de l'étagère (1), et qui est muni d'un dispositif de levage et d'abaissement permettant de déplacer des cassettes (7) entre les plans de travail (A, B).

5. Procédé selon au moins l'une quelconque des revendications 1 à 4,
dans lequel un dispositif de retrait (15) est utilisé, qui comprend une traverse longitudinale (22) adaptée à la longueur d'une cassette (7) afin d'étendre celle-ci de manière longitudinale, et est muni d'un dispositif de manipulation (24) entraîné par un moteur et permettant de tirer et pousser une cassette (7) le long de la traverse longitudinale (22).

6. Procédé selon les revendications 3 et 5,
dans lequel un dispositif de retrait (15) est utilisé, dont la traverse longitudinale (22) est reliée, au niveau de ses régions d'extrémité situées du côté avant, à respectivement un chariot (27) guidé de manière mécanique ou électronique, en particulier monté sur rails, dans lequel les chariots (27) forment avec la traverse longitudinale (22), en dessous de la traverse longitudinale (22), un espace libre adapté aux dimensions d'une telle cassette (7) afin de permettre le passage sans entrave de cassettes (7) remisées sur des emplacements de préparation de commandes (12).

7. Procédé selon au moins l'une quelconque des revendications 1 à 6,
dans lequel un chariot de préparation de commandes (14) est utilisé, qui présente au moins une structure de dépose intermédiaire (17) permettant le stockage intermédiaire de marchandises allongées et dont la longueur est adaptée à la longueur d'une cassette (7) afin d'étendre celle-ci de manière longitudinale, dans lequel la structure de dépose intermédiaire (17) est reliée, au niveau de ses régions d'extrémité situées du côté avant, respectivement à un élément de chariot (18) guidé de manière mécanique ou électronique, en particulier monté sur rails, lesquels éléments de chariot (18) forment avec la structure de dépose intermédiaire (17), en dessous de la structure de dépose intermédiaire (17), un espace libre adapté aux dimensions d'une cassette (7) afin de permettre le passage sans entrave de cassettes (7) remisées sur des emplacements de préparation de commandes (12), et dans lequel la structure de dépose intermédiaire (17) du chariot de préparation de commandes (14) consiste en particulier essentiellement en une traverse (19) sur laquelle sont agencées des entretoises transversales (20).

8. Procédé selon au moins l'une quelconque des revendications 1 à 7,
dans lequel un chariot de préparation de commandes (14) est utilisé, qui présente une longueur adaptée à la longueur d'une cassette (7) afin d'étendre celle-ci de manière longitudinale et présente au niveau de ses régions d'extrémité situées du côté avant respectivement un élément de chariot (18) guidé de manière mécanique ou électronique, en particulier monté sur rails, dans lequel au moins un de ces éléments de chariot (18) est muni d'une plate-forme d'opérateur (21) et/ou dans lequel le chariot de préparation de commandes (14) est équipé d'au moins un manipulateur pour des pièces d'œuvre stockées dans les cassettes (7).

9. Procédé selon au moins l'une quelconque des revendications 1 à 8,
dans lequel les emplacements de préparation de commandes (12) sont formés grâce à des structures porteuses (16) destinées à des cassettes (7), dans lequel le niveau des structures porteuses (16) correspond essentiellement au niveau des emplacements de stockage de mise à disposition (9) les plus bas au sein de l'étagère (1).
